# EUROPEAN PATENT APPLICATION

(11) **EP 4 588 722 A1**
(43) Date of publication of application: **23.07.2025**
(21) Application number: 24153186.2
(22) Date of filing: 22.01.2024
(51) Int. Cl.: B60R 1/074

(54) **REAR VIEW ASSEMBLY WITH SEALING ELEMENTS AND VEHICLE WITH SUCH REAR VIEW ASSEMBLY**

(71) Applicant: Motherson Innovations Deutschland GmbH, 70327 Stuttgart (DE)
(72) Inventor: Karácsony, Csaba, 9173 Gy rladamér (HU); Horváth, Richárd, 9172 Gy rzámoly (HU)

(57) **Abstract**

The present disclosure is directed to a rear-view assembly (102, 104) for a vehicle comprising a base (204) adapted to be mounted to a side of the vehicle (100), wherein the base (204) has a first attachment end disposed at the side of the vehicle (100) and a second attachment end disposed opposite the first attachment end, the base (204) including a base frame (802) and a base cover (902); a head (206) for supporting at least one component for providing a rearward field of view to a driver of the vehicle (100) and being disposed at the second attachment end of the base (204). The rear-view assembly (102, 104) further comprises an actuator (402), a shroud (518) and a sealing element (908) comprising a head portion (1002, 1104) and a foot portion (1004, 1104), wherein the sealing element (908) provides a sealing between the shroud (518) and the base cover (902). The present disclosure is further directed to a vehicle comprising such a rear-view assembly (102, 104).

## Description

The present disclosure relates to a rear-view assembly for a vehicle, the rear-view assembly comprising an actuator and a sealing element along with sealing head mover for said rear-view assembly. It also relates to a vehicle with at least one such rear-view assembly.

The statements in this section merely provide background information related to the present disclosure and may not constitute prior art.

It is known for rear-view mirrors for a motor vehicle to be provided that, for example, includes a power fold or breakaway or inwardly folding mirror assembly such as, for example, an electrically operated inward folding mirror in which the mirror head by way of an electrically operated actuator assembly is pivotable between a driving or use position and an inwardly folded or parking position.

Conventional actuator housings typically include upper and lower housing members, with the actuator motor and gearing supported in the lower housing member. The actuator motor drives the gearing, which in turn drives a positioning member. Sealing elements used in the actuator assembly comprise a die cut gasket which is positioned between the upper and lower housing members which requires careful alignment between the housing members to assure the integrity of the seal.

Since actuator assemblies are used in exterior rearview mirror assemblies they are exposed to numerous elements, such as rain and road spray, which could adversely affect their operation and functionality. Consequently, conventional actuators used in exterior rearview mirrors include weather seals, which are needed to seal the openings in the housing, for example, the openings in the upper housing through which the mirror positioning member extends and the connection between the upper and lower housing members. These weather seals prevent moisture and debris, which are typically encountered during use of the vehicle, from entering the actuator housing. Therefore, there is felt a need of a rear-view assembly that alleviates the aforementioned drawbacks of the conventional rear-view mirrors.

US20190275943 discloses an exterior mirror assembly for a motor vehicle the mirror assembly includes a mirror base or mounting base and an actuator for electric inward folding. The mirror assembly includes a sealing element that seals the mirror head and the mirror base at least when the mirror head is in a use or extended position. When the mirror head is pivoted between the use position and a folded or stowed position, the sealing element is disengaged from the mirror head or the mirror base to allow for reduced friction pivoting of the mirror head relative to the mirror base.

It is an object of the present disclosure to provide a rear-view assembly by which the drawbacks as mentioned above can be eliminated or at least reduced. In particular, it is one task to provide the rear-view assembly that prevents rains, contaminants and road spray from entering the mirror assembly.

The objects are achieved by the features specified in claim 1. Advantageous embodiments are the subject of the dependent claims.

Thus, the present disclosure provides a rear-view assembly, the rear-view assembly comprising:
a base adapted to be mounted to a side of the vehicle, wherein the base has a first attachment end disposed at the side of the vehicle and a second attachment end disposed opposite the first attachment end, the base having a base frame and a base cover;
a head for supporting at least one component for providing a rearward field of view to a driver of the vehicle and being disposed at the second attachment end of the base, wherein the head comprises an aperture through which the base can be accessed;
an actuator comprising a first attachment component;
a shroud comprising a second attachment component adapted to attach to the first attachment component of the actuator to fixedly attach the shroud to the actuator; and
a sealing element attached to the base cover, wherein the sealing element comprises a head portion and a foot portion.

According to the present disclosure the rear-view assembly comprises a sealing element comprising a head portion and a foot portion. The head portion of the sealing element further comprises at least one cross section for contact with a curved surface of the shroud, wherein the curved surface of the shroud is anyone of a convex and concave surface. The at least one cross section is movable and slides along the curved surface of the shroud when the head is tilted upwards and downwards and wherein the curved surface of the shroud is anyone of a convex and concave surface.

The foot portion of the sealing element contacts a curved outer surface of the base cover, wherein the foot portion extends at an angle dependent on a curvature of the base cover. The sealing element comprising head portion and foot portion provides a seal between the shroud and the base cover.

The geometry of the at least one cross section of the head portion and foot portion of the sealing element is adapted to the curvature of the shroud and base cover respectively. The head portion further comprises two cross sections for contact with a curved surface of the shroud, wherein the curved surface is anyone of a convex and concave surface, wherein the at least one cross-section at the head portion is substantially in a form of a triangle for contact with the curved surface of the shroud, and wherein the curved surface is anyone of a convex and concave surface. The shape of the at least one cross section of the head portion can substantially be round.

The rear-view assembly additionally comprises a sealing head mover comprising an actuator moving the entire mirror head. For that purpose, a tilt axle of the actuator is adapted to be fixedly attached to the case lower and/or the case frame, and/or a hinge of the actuator is adapted to be engaged by a complementary hinge of the case frame. In addition or as alternative, the actuator is associated with a shroud for attachment of the actuator such that the mirror head creates a seal. An additional seal is created by the attachment of the mirror head to the mirror base.

It should be noted that the features set out individually in the following description can be combined with each other in any technically advantageous manner and set out other forms of the present disclosure. It should be understood, however, that the disclosure is not limited to the precise arrangements and instrumentalities shown. The accompanying drawings, which are incorporated in and constitute a part of this specification, illustrate an implementation of system, apparatuses, and methods consistent with the present description and, together with the description, serve to explain advantages and principles consistent with the disclosure. The figures are not necessarily drawn to scale. Like numbers used in the figures refer to like components. However, it will be understood that the use of a number to refer to a component in a given figure is not intended to limit the component in another figure labelled with the same number. The description further characterizes and specifies the present disclosure in particular in connection with the Figures.

The present disclosure is described in detail with reference to the drawings attached wherein:
Figure 1 illustrates a vehicle in accordance with aspects of the present disclosure;
Figure 2A illustrates a top-down view of the rear-view assembly with the mirror head in a folded position in accordance with aspects of the present disclosure;
Figure 2B illustrates a top down view of the rear-view assembly with the mirror head in a folded position in accordance with aspects of the present disclosure;
Figure 3A illustrates a side view of the rear-view assembly with the mirror head in a nominal position in accordance with aspects of the present disclosure;
Figure 3B illustrates a side view of the rear-view assembly with the mirror head tilted upwards in accordance with aspects of the present disclosure;
Figure 3C illustrates a side view of the rear-view assembly with the mirror head tilted downwards in accordance with aspects of the present disclosure;
Figure 4 illustrates an assembled view of an actuator to be used with a rear-view assembly in accordance with aspects of the present disclosure;
Figure 5A-5C illustrates an isometric exploded view of the actuator of figure 4;
Figure 6 shows the case lower in accordance with aspects of the present disclosure;
Figure 7 illustrates that the case frame in accordance with aspects of the present disclosure;
Figure 8 illustrates a base frame of a rear-view assembly in accordance with aspects of the present disclosure;
Figure 9 illustrates a base cover of a rear-view assembly in accordance with an aspect of the present disclosure;
Figure 10A illustrates a perspective view of the rear-view assembly with the mirror head in a nominal position in accordance with an aspect of the present disclosure;
Figure 10B illustrates a perspective view of the rear-view assembly the mirror head tilted downwards in accordance with an aspect of the present disclosure;
Figure 10C illustrates a perspective view of the rear-view assembly with the mirror head tilted upwards in accordance with an aspect of the present disclosure;
Figure 10D illustrates a perspective view of the rear-view assembly with the mirror head in accordance with another embodiment of the present disclosure;
Figure 10E illustrates a perspective view of the rear-view assembly with mirror head in accordance with another embodiment of the present disclosure;
Figure 11A illustrates perspective view of the rear-view assembly in a nominal position, according to another embodiment of the present disclosure;
Figure 11B illustrates perspective view of the rear-view assembly with mirror head titled downwards, according to another embodiment of the present disclosure; and
Figure 11C illustrates perspective view of the rear-view assembly with mirror head titled upwards, according to another embodiment of the present disclosure.

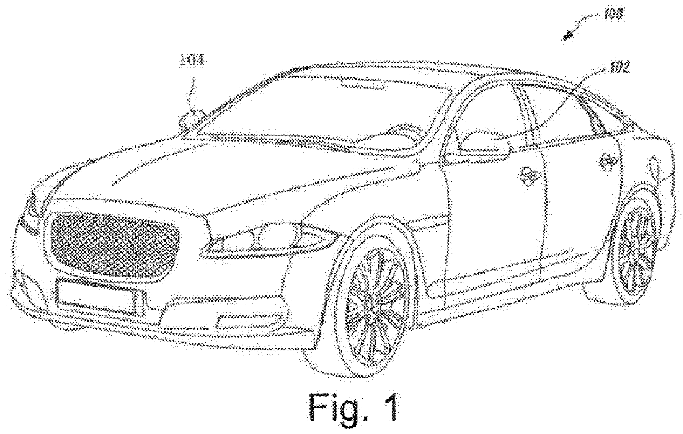

Figure 1 shows a vehicle 100 in accordance with aspects of the present disclosure. As shown in figure 1, the vehicle 100 comprises a rear-view assembly 102, 104 on each of its sides. Although the vehicle 100 is illustrated as a passenger car, the vehicle 100 may be any other type of vehicle, non-limiting examples of the vehicle 100 comprises a truck, off-road vehicle, bus, motorcycle, aircraft, tram, locomotive, or heavy-duty vehicle.

In figure 1, the rear-view mirror devices 102, 104 are illustrated as side view mirrors. In alternative variations, the rear-view assembly 102, 104 may be implemented as camera systems. The rear-view assembly 102, 104 are arranged on the vehicle 100 such that they may be adjusted to provide a view rearward of the vehicle to a driver.

The operation of the rear-view assembly 102, 104 will now be further described with additional reference to further figures. While the following description will refer to the rear-view assembly 104, it will be appreciated that the rear-view assembly 104 has an analogue structure.

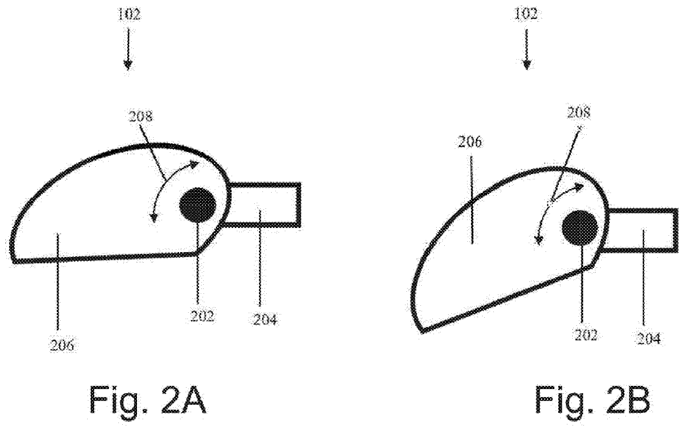

Figures 2A-B show a top-down view of the rear-view assembly 102 in accordance with aspects of the present disclosure.

As shown in figures 2A-B the rear-view assembly 102 comprises an axis 202, a mirror base 204, and a mirror head 206. In figure 2A, the rear-view assembly 102 can be seen in a top down view with the mirror head 206 in the drive position. When actuated in a first direction relative to the axis 202 as shown by line 208, movement is imparted to the mirror head 206 to rotate it around the axis 202 to a stored position as shown in figure 2B. Additionally, when actuated in a second direction relative to the axis 202 as shown by line 208, movement can be imparted to the mirror head 206 when in the stored position shown in figure 2B to rotate it back to the drive position shown in Figure 2A.

The actuation of the mirror head 206 about the axis 202 can be done from any position to move the mirror head 206 to any other position about the axis 202. For example, the mirror head 206 may start in the stored position as shown in figure 2B and then be actuated in the second direction about the axis 202 to move the mirror head 206 to the drive position. The mirror head 206 may be adjusted to any position between the drive position shown in figure 2A and the stored position shown in figure 2B.

Additionally, when the mirror head 206 is in the drive position as shown in figure 2A, actuation can be performed such that it moves the mirror head 206 to adjust the rearward field of view of the driver of the vehicle 100. The movement required to adjust the mirror head 206 such that it adjusts the rearward field of view of the driver of the vehicle 100 is less than that required to move the mirror head 206 from the drive position to the stored position or from the stored position to the drive position.

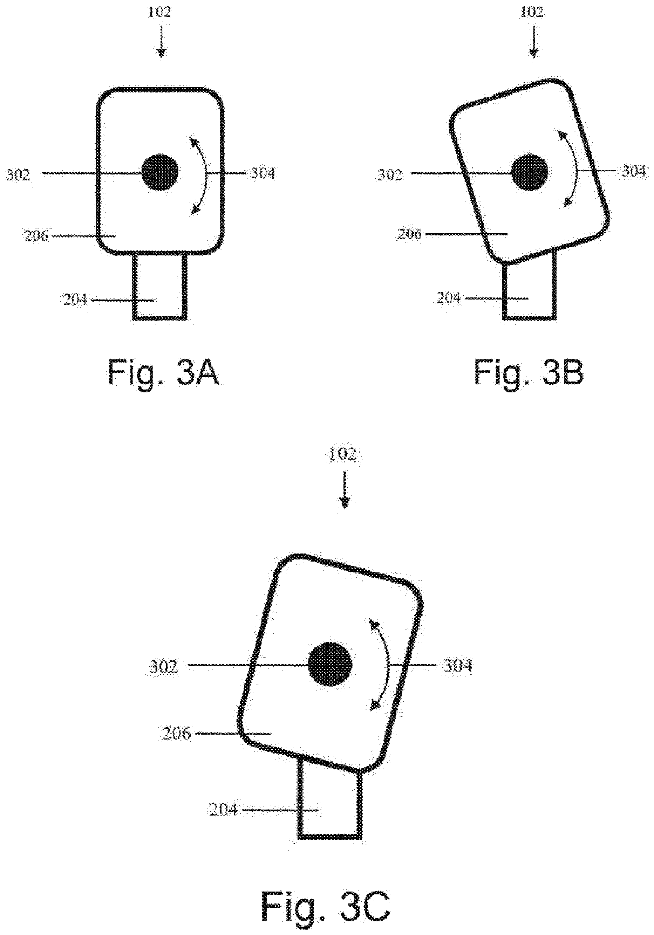

Figures 3A-C show a side view of the rear-view assembly 102 in accordance with aspects of the present disclosure.

As shown in Figures 3A-C, the rear-view assembly 102 comprises a mirror base 204, a mirror head 206, and an axis 302. In figure 3A, the rear-view assembly 102 can be seen in a side view with the mirror head 206 in a nominal position. When actuated in a first direction as shown by line 304, movement is imparted to the mirror head 206 such that it is tilted upwards to the position shown in figure 3B. When actuated in a second direction as shown by line 304, movement is imparted to the mirror head 206 such that it is tiled downward to the position shown in figure 3C.

The actuation of the mirror head about the axis 302 can be done from any position to move the mirror head 206 to any other position about the axis 302. For example, the mirror head may start tilted upwards as shown in figure 3B and then actuated in the second direction to tilt the mirror head 206 downwards. While being tilted downwards, actuation can be stopped to adjust the mirror head 206 to the nominal position shown in figure 3A or continued to adjust the mirror head 206 downwards until it reaches the position shown in figure 3C. Further, the mirror head 206 can be tilted to any position between that shown in figure 3B and figure 3C.

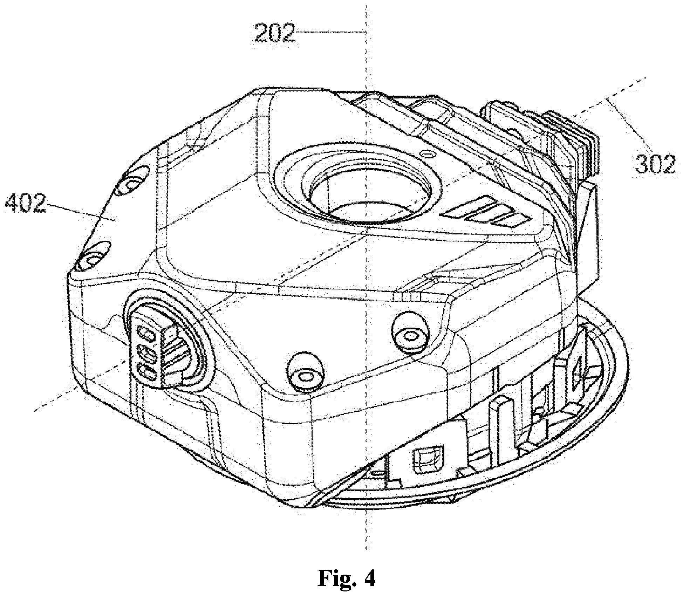

Figure 4 shows an actuator 402 in accordance with aspects of the present disclosure. As shown in the figure, the actuator 402 comprises the axis 202 and the axis 302. The axis 202 is substantially perpendicular to the axis 302. Further, the axis 202 is substantially vertical relative to actuator 402 and the axis 302 is substantially horizontal relative to actuator 402.

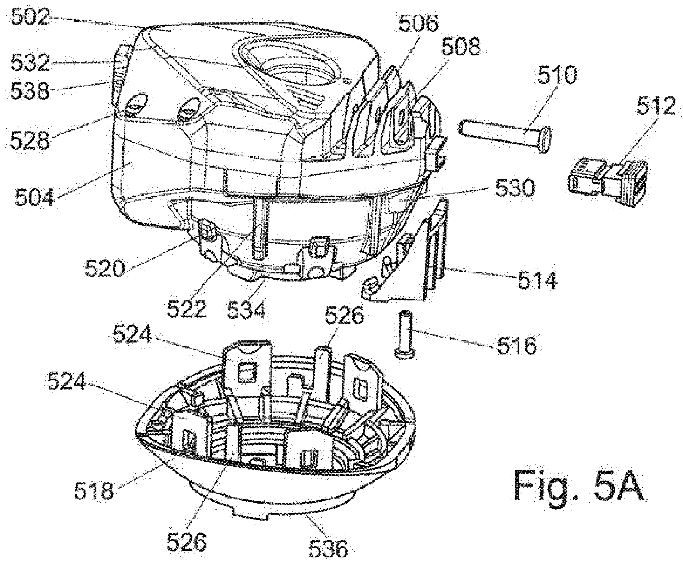

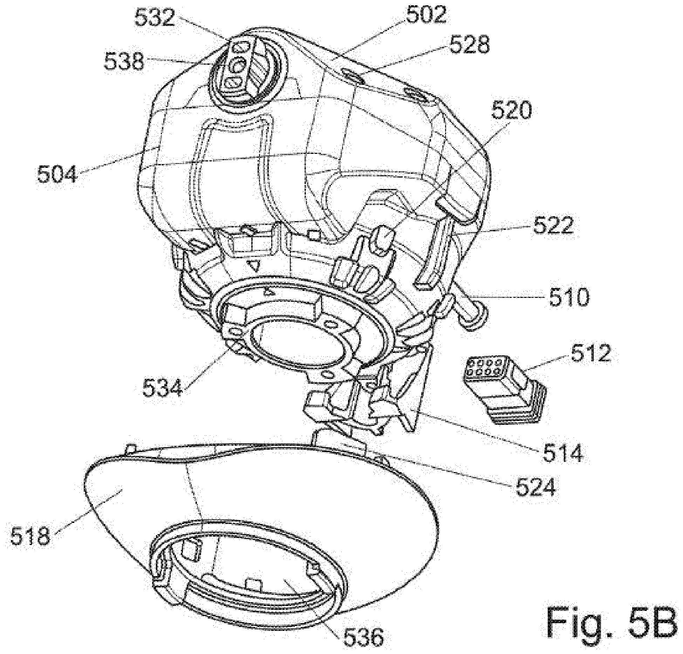

As shown in the figures 5A-B, the actuator 402 further comprises an upper housing 502, a lower housing 504, an interleaved hinge 506 providing one or more connection spaces between two layers, projections or the like, an aperture 508, a tail-pin 510, a connector 512, a camera mount 514, a fastener 516, a shroud 518, protrusions 520, guides 522, a further fastener 528, a further aperture 530, a tilt axle 532, and a foot 534. The shroud 518 provides a spherical seat and further comprises one or more clips 524, one or more guides 526, and a still further aperture 536. The tilt axle 532 further comprises an aperture 538.

The upper housing 502 and the lower housing 504 are operable to house the internal components of the actuator 402. The upper housing 502 and the lower housing 504 are additionally operable to be joined or fastened together by the fastener 528. In this example variation, the fastener 528 is illustrated as a bolt. However, in other variations, the fastener 528 may be a pin, weld, clip or any other fastener or fastening method that allows the upper housing 502 and the lower housing 504 to be joined together.

The interleaved hinge 506 is operable to allow movement of a case frame 412 of the rear-view assembly 102. The interleaved hinge 506 is additionally operable to contain the aperture 508 and to be comprised of multiple protrusions with gaps in-between each successive protrusion. The gaps between the protrusions allow the case frame 802 with corresponding protrusions to be interleaved with the interleaved hinge 506.

The aperture 508 is operable to allow insertion of the tail-pin 510 and to be axially aligned with an aperture of an interleaved hinge of the case frame 412. The aperture 508 is further operable to be axially aligned with the axis 302 of figure 3.

The tail-pin 510 is operable to be placed through the aperture 508 of the interleaved hinge 506. The tail-pin 510 is additionally operable to be placed through the aperture 508 and an aperture of the case frame 412 interleaved with interleaved hinge 506.

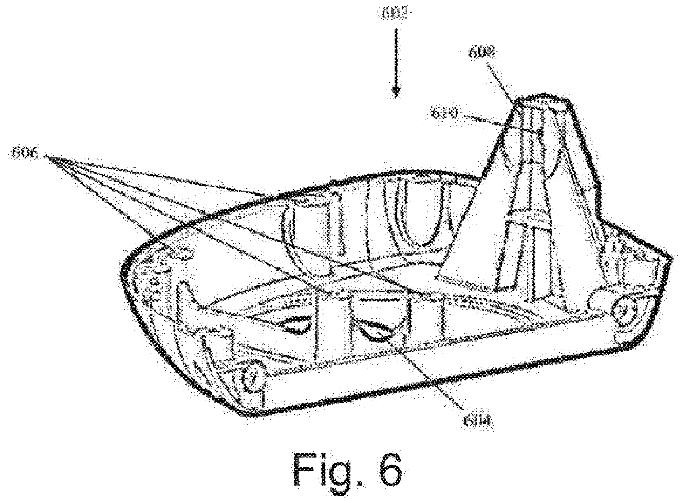

Figure 6 shows the case lower 602 in accordance with aspects of the present disclosure. As shown in the figure the case lower 602 further comprises an aperture 604, at least one first mount 606, a second mount 608, and a further aperture 610.

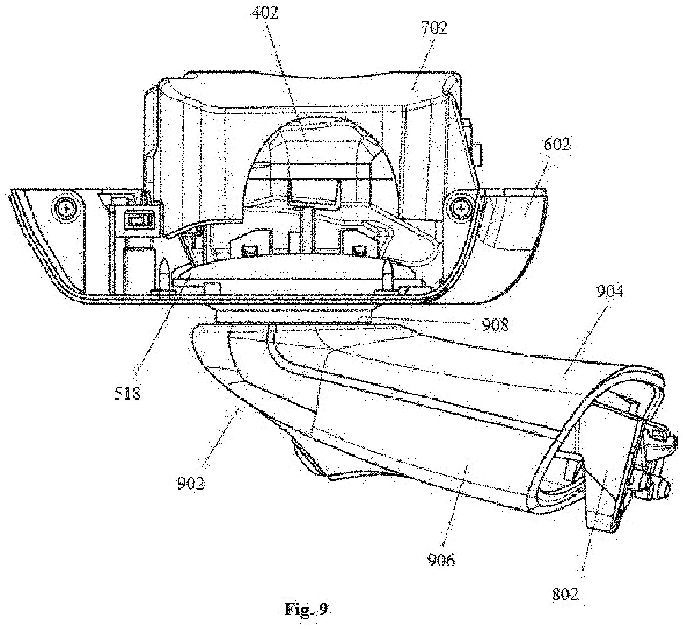

The case lower 602 is operable to provide a connection to the actuator 402 (as seen in fig. 9A) and a mounting point for the case frame 702. It is not illustrated in the figure 6, but the case lower 602 is additionally operable to provide, at least partially, a mounting point for a device, a backing plate, a bezel, a camera, a mirror cover, a light module, a multi-functional lamp, a turn signal, a light module, an antenna and/or any other component that may be comprises in the rear-view assembly.

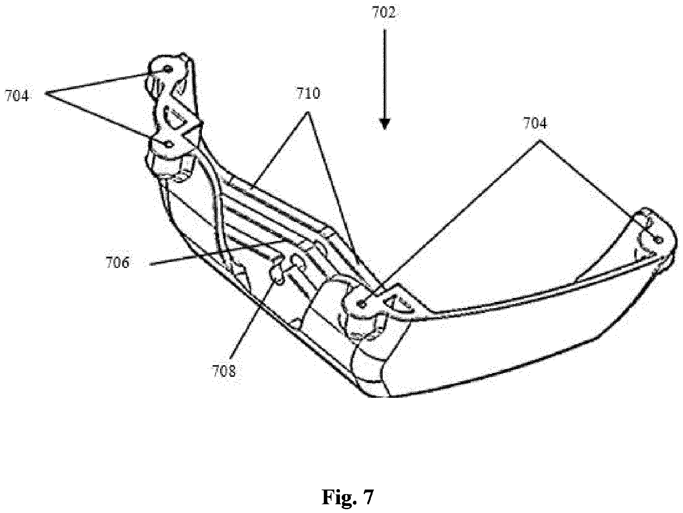

Figure 7 illustrates a case frame 702 in accordance with aspects of the present disclosure comprises a mount 704, an interleaved hinge 706, an aperture 708, and webs 710.

The case frame 702 is operable to provide a connection to the actuator 402 (not shown) via the interleaved hinge 706 and the aperture 708, as well as a mounting point for the case lower 602 via the mount 704. It is to be noted that the case frame 702 is additionally operable to provide, at least partially, a mounting point for a device, a backing plate, a bezel, a camera, a mirror cover, a light module, a multi-functional lamp, a turn signal, a light module, an antenna and/or any other component that may be included in a rear-view assembly.

The mount 704 is operable to provide mounting points which correspond to the mount 606 of the case lower 602 in order to facilitate the attachment of the case frame 702 to the case lower 602. The mount 704 may be fastened to the mount 606 via one of a plurality of known fastening methods including bolts, clips, pins, welds, or any other known fastening method.

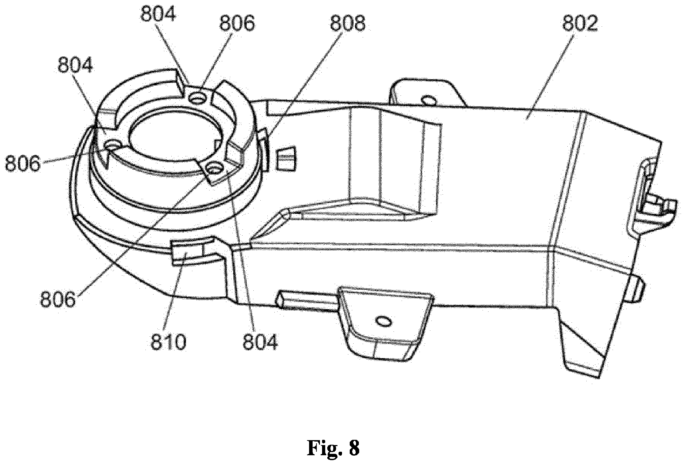

Figure 8 illustrates a mirror base with a base frame 802 in accordance with aspects of the present disclosure. As shown, the base frame 802 comprises one or more recesses 804, at least one aperture 806, and a protrusion 808. Each recess 804 has a contour that matches the contour of the extension of the actuator 402 such that when the actuator 402 is arranged on the base frame 802, the matching contours encourages the alignment of the at least one aperture 806, where in this embodiment the at least one aperture 806 comprises three apertures of base frame 802 matching with apertures of the actuator 402. The alignment between the apertures 806 allows for the insertion of a fastener in order to fixedly attach the actuator 402 to the base frame 802. In this embodiment, the fastener used to fixedly attach the actuator 402 to the base frame 802 is a bolt (not shown). However, in other variations, the fastener used may be a pin, weld, clip or any other fastener or fastening method that can fixedly attach the actuator 402 to the base frame 802.

Figure 9 illustrates a base cover 902 of a rear-view assembly in accordance with aspects of the present disclosure, with an upper base cover 904 and a lower base cover 906 attached to the base frame 802. When attached to the base frame 802, the upper edge of the upper base cover 904 and the lower base cover 906 abut the sealing element 908, creating a seal that prevents the intrusion of particles or contaminants from entering the rear-view assembly through the gap between the sealing element 908 and the base cover 902.

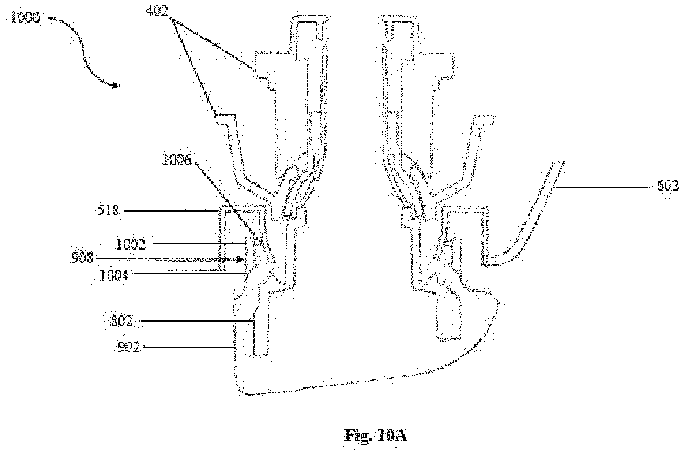

Figures 10A-10C show a sealing head mover 1000 configured with an actuator 402 and connected between a shroud 518 and a base cover 902. With reference to the cut-away view shown in figure 10A, the head mover 1000 comprises a sealing element 908 having two portions namely a head portion 1002 and a foot portion 1004. The head portion 1002 and foot portion 1004 provide a seal between the shroud 518 and the base cover 902 of the rear-view assembly 102. The head portion 1002 comprises a cross section that contacts the curved surface of the shroud 518 in a horizontal direction. The head portion 1002 comprising the cross section 1006 contacts a convex surface of the shroud 518 and positioning of the foot portion 1004 is such that it contacts the outer surface of the base cover 902.

The cross section 1006 of the head portion 1002 is movable while being in contact with the convex surface of the shroud 518 and slides along the convex surface.

In an embodiment, the cross section 1006 of the head portion 1002 is substantially in the form of a triangle that extend towards the convex surface of the shroud 518 in a horizontal position. The sealing element 908 provides a seal between the shroud 518 and the base cover 902. The head portion 1002 of the sealing element 908 extends to meet the face of the shroud 518 at an angle. In some embodiments, the angle may be 90 degrees. In some embodiments, the angle is determined by the curvature of the shroud 518. The geometry of the head portion 1002 and foot portion 1004 of the sealing element 908 can be adapted to the curvature of the shroud 518 and the base cover 902.

The sealing element 908 prevents the intrusion of contaminants such as water, dust, salt, or other fluid or debris into the mirror head. The attachment of a mirror head to a mirror base having the sealing element creates another seal between the mirror base cover and the shroud in order to and prevent the intrusion of contaminants such as water, dust, salt, or other fluid or debris into the mirror head.

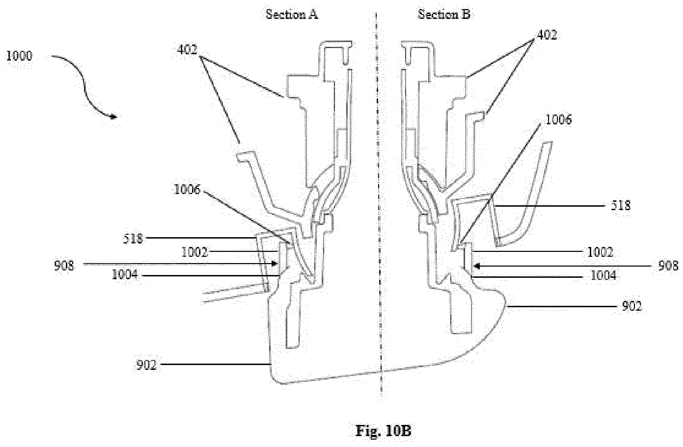

Figure 10B shows a sealing head mover 1000 configured with an actuator 402. The sealing head mover 1000 is actuated when titled downwards and connected between a shroud 518 and a base cover 902. The head portion 1002 of the sealing element 908 comprises a cross section 1006 in a triangular shape making a contact with the curved surface of the shroud 518. The curved surface of the shroud on which the cross section 1006 makes contact is a convex surface. The foot portion 1004 of the sealing element 908 makes a contact with the outer surface of the base cover 902.

As seen in the figure, the position of the sealing element 908 on Section A changes its direction such that the head portion 1002 having the triangular cross section area 1006 moves to the upper part of the convex surface of the shroud 518. The sealing element 908 in Section B of the mirror head moves to the lower part of the convex surface of shroud 518. The position of the head portion 1002 of the sealing element 908 remains constant with the outer surface of the base cover 902 during the downward movement of the mirror head. The sealing element 908 therefore provides a sealing arrangement while the mirror head 206 is moved in the upward movement through a sliding mechanism of the cross section 1006 over the convex surface of the shroud 518.

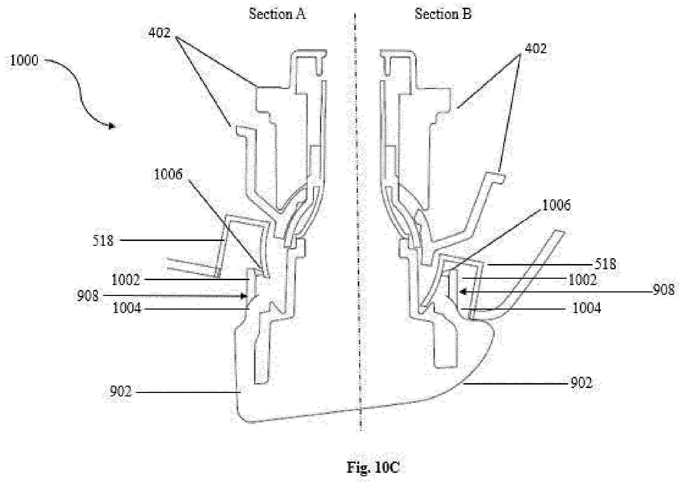

Figure 10C shows a sealing head mover 1000 configured with an actuator 402. The head mover 1000 is actuated when titled upwards and connected between a shroud 518 and a base cover 902. A sealing element 908 is attached to the base cover 902, wherein the sealing element 908 comprises a head portion 1002 and a foot portion 1004. The head portion 1002 of the sealing element 908 further comprises a triangular cross section 1006 that makes contact with the curved surface of the shroud 518. The curved surface of the shroud 518 on which the cross section 1006 makes contact is a convex surface. The foot portion 1004 of the sealing element 908 makes a contact with the outer surface of the base cover 902.

As seen in the figure, when the head mover 1000 is tilted in the upward position, the position of triangular cross section 1006 of the head portion 1002 of the sealing element moves toward the lower part of the convex surface of the shroud 518 on section A of the mirror head. The triangular cross section 1006 on the head portion 1002 of the sealing element 908 on section B of the mirror head moves to the upper part contacting the convex surface of the shroud 518. The position of the foot portion 1004 of the sealing element 908 remains constant with the outer surface of the base cover 902 during the upward movement of the mirror head. The sealing element 908 thus provides a sealing arrangement during the movement of the mirror head 206 in an upward direction by providing a sliding mechanism of the cross section 1006 over the convex surface of the shroud 518.

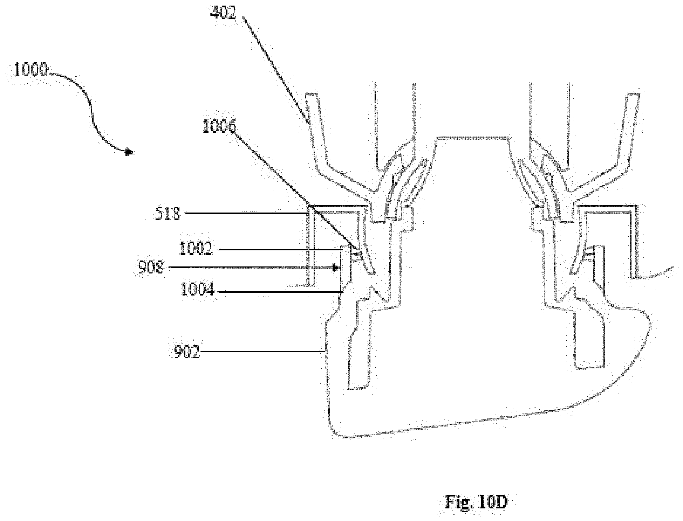

Figure 10D shows a head mover 1000 in accordance with another embodiment of the present disclosure. Figure 10D shows the head mover configured 1000 with an actuator 402 where the head mover 1000 is in nominal position and connected between a shroud 518 and a base cover 902. A sealing element 908 is attached to the base cover 902 comprising a head portion 1002 and a foot portion 1004. The head portion 1002 of the sealing element 908 further comprises two cross sections 1006 of triangular shape which makes contact with a curved surface of the shroud 518. The curved surface of the shroud 518 is a convex surface. The two cross sections 1006 of the head portion 1002 contacting the convex surface of the shroud 518 provides a sliding mechanism during the actuation of the mirror head 206 in upward and downward movement, thereby preventing contaminants to enter the mirror head 206 through the sealing element 908.

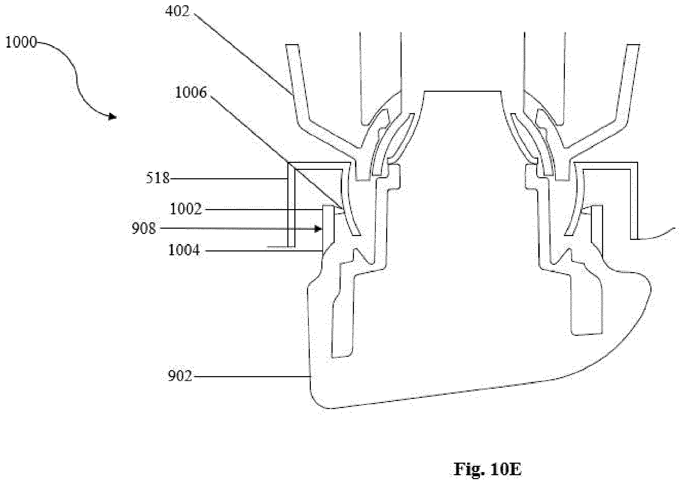

Figure 10E shows a sealing head mover 1000 in accordance with another embodiment of the present disclosure. As seen in the figure, the head mover 1000 is configured with an actuator 402 where the head mover 1000 is in nominal position and connected between a shroud 518 and a base cover 902. A sealing element is attached to the base cover 902, wherein the sealing element 908 comprises a head portion 1002 and a foot portion 1004. The head portion 1002 of the sealing element 908 further comprises a cross section 1006 substantially in the form of a round shape which extends towards a curved surface of the shroud 518. The curved surface of the shroud 518 is a convex surface. The foot portion 1004 makes a contact with the outer surface of the base cover 902. The cross section 1006 having the round shape connected to the head portion 1002, makes contact with the convex surface of the shroud 518 which provides a sliding mechanism during the actuation of the mirror head 206 in upward and downward movement, thereby preventing contaminants to enter the mirror head 206 through the sealing element 908. The sealing element can be but not limited to gasket sealing.

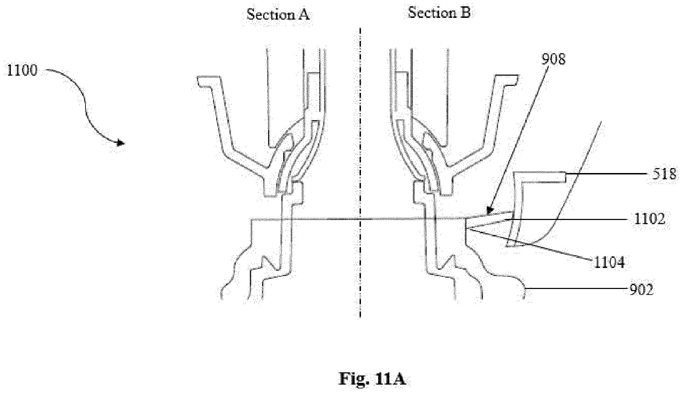

Figure 11A shows a sealing head mover 1100 configured with an actuator 402 and connected between a shroud 518 and a base cover 902. The head mover 1100 comprises a sealing element 908 having two portions namely a head portion 1102 and a foot portion 1104. The head portion 1102 and foot portion 1104 provide a seal between the shroud 518 and the base cover 902 of the rear-view assembly 102. The head portion 1102 is positioned in a way that the head portion 1102 contacts a curved surface of the shroud 518. The curved surface of the shroud 518 is a concave surface. The positioning of the foot portion 1104 is such that it contacts the outer surface of the base cover 902.

The head portion 1102 of the sealing element 908 extends to meet the concave surface of the shroud 518 at an angle, thereby providing a sliding mechanism over the concave surface of the shroud 518 during the upward and downward movement of the mirror head 206.

In some embodiments, the angle may be 90 degrees. In some embodiments, the angle is determined by the curvature of the shroud 518. The geometry of the head portion 1102 and foot portion 1104 of the sealing element 90 can be adapted to the curvature of the shroud 518 and the base cover 902.

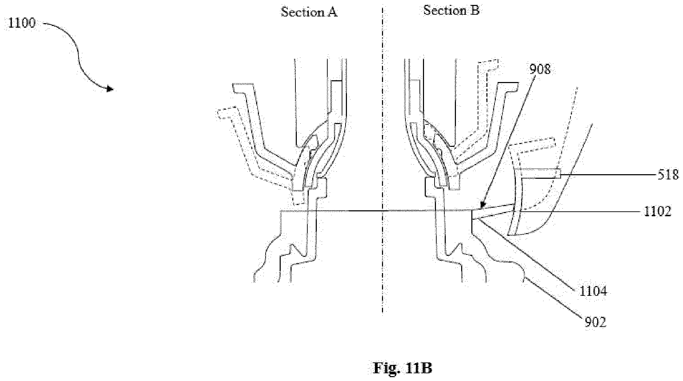

Figure 11B shows a sealing head mover 1100 configured with an actuator 402. The head mover 1100 when actuated in Section A direction, titled downwards when connected between the shroud 518 and a base cover 902. As seen in the figure, a sealing element 908 comprises a head portion 1102 and a foot portion 1104. The head portion 1102 further comprises cross section (not shown) that makes contact with a curved surface of the shroud 518. The curved surface of the shroud 518 is a concave surface. The foot portion 1104 makes contact with the outer surface of the base cover 902.

The position of the sealing element in section A changes its direction such that the head portion 1102 which is in contact with concave surface of the shroud 518 moves toward the lower part of the concave surface of the shroud 518. The position of the foot portion 1104 of the sealing element 908 remains constant with the outer surface of the base cover 902 during the downward movement of the mirror head 206. The head portion 1102 of the sealing element 908 provides a sliding mechanism over the concave surface of the shroud 518 during the downward movement of the mirror head 206.

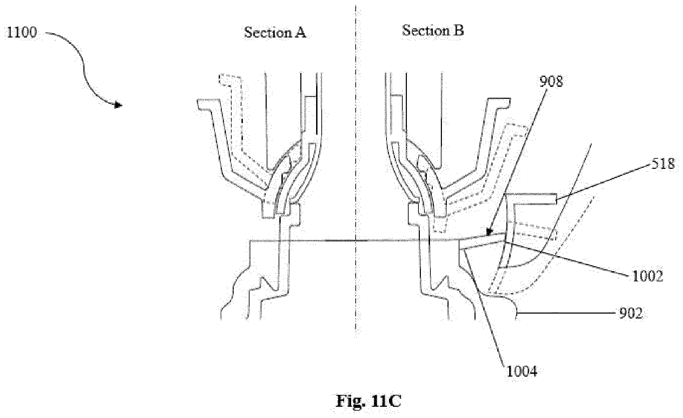

Figure 11C shows a sealing head mover 1100 configured with an actuator 402. The head mover 1100 when actuated in Section B direction, titled upwards and is connected between the shroud 518 and a base cover 902. As seen in the figure, a sealing element 908 comprises a head portion 1102 and a foot portion 1104, wherein the head portion 1102 further comprises a cross section (not shown) which makes contact with a curved surface of the shroud 518. The curved surface of the shroud 518 is a concave surface. The foot portion 1104 makes contact with the outer surface of the base cover 902.

During the upward movement towards section A direction, the head portion 1102 which is in contact with the concave surface of the shroud 518, moves to the upper part of the concave surface of the shroud 518. The position of the foot portion 1104 of the sealing element 908 remains constant with the outer surface of the base cover 902 during the upward movement. The head portion 1102 of the sealing element 908 provides a sliding mechanism over the concave surface of the shroud 518 during the upward movement of the mirror head 206 for sealing between the shroud 518 and the base cover 902.

Although the subject matter of the present disclosure has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims, i.e. the features disclosed in the foregoing description, the claims, and the drawings may be essential, both individually and in any combination, for accomplishing the present disclosure in its various embodiments. The embodiments shown herein are only examples of the present disclosure and must therefore not be understood as being restrictive. Alternative embodiments considered by the skilled person are equally covered by the scope of protection of the present disclosure.

### Reference Signs

- 100: vehicle
- 102, 104: rear-view assembly
- 202,302: axis
- 204: base
- 206: head
- 208, 304: line
- 402: actuator
- 502: upper housing
- 504: lower housing
- 506: hinge
- 508: aperture
- 510: tail-pin
- 512: connector
- 514: camera mount
- 516,528: fastener
- 518: shroud
- 520: protrusions
- 522: guides
- 524: clips
- 530: aperture
- 532: tilt Axle
- 534: foot
- 536: aperture
- 538: aperture
- 602: case Lower
- 604: aperture
- 606: first mount
- 608: second mount
- 610: further aperture
- 702: case frame
- 704: mount
- 706: hinge
- 708: aperture
- 710: webs
- 802: base Frame
- 804: recesses
- 806: aperture
- 808: protrusions
- 902: base cover
- 904: upper base cover
- 906: lower base cover
- 908: sealing element
- 1000: sealing head mover in accordance with the present disclosure
- 1002: head portion
- 1004: foot portion
- 1006: triangular cross-section
- 1100: sealing head mover in accordance with another embodiment
- 1102: head portion
- 1104: foot portion
- 1106: triangular cross-section

## Claims

1. A rear-view assembly (102, 104) for a vehicle, the rear-view assembly (102, 104) comprising:
a base (204) adapted to be mounted to a side of the vehicle (100), wherein the base (204) has a first attachment end disposed at the side of the vehicle (100) and a second attachment end disposed opposite the first attachment end, the base (204) including a base frame (802) and a base cover (902);
a head (206) for supporting at least one component for providing a rearward field of view to a driver of the vehicle (100) and being disposed at the second attachment end of the base (204); wherein the head (206) comprises an aperture (508) through which the base (204) can be accessed and a case lower (602);
an actuator (402) comprising a first attachment component;
a shroud (518) comprising a second attachment component adapted to attach to the first attachment component of the actuator (402) to fixedly attach the shroud (518) to the actuator (402); and
a sealing element (908) attached to the base cover (902), wherein the sealing element (908) comprises a head portion (1002, 1102) and a foot portion (1004, 1104).

2. The rear-view assembly as claimed in claim 1, wherein the head portion (1002, 1102) of the sealing element (908) comprises at least one cross section (1006) for contact with a curved surface of the shroud (518), wherein the curved surface of the shroud (518) is anyone of a convex and concave surface.

3. The rear-view assembly as claimed in claim 2, wherein the at least one cross section (1006) is movable and slides along the curved surface of the shroud (518) when the head (206) is tilted upwards and downwards and wherein the curved surface of the shroud (518) is anyone of a convex and concave surface.

4. The rear-view assembly as claimed in claim 1, wherein the foot portion (1004, 1104) contacts a curved outer surface of the base cover (902).

5. The rear-view assembly as claimed in claim 4, wherein the foot portion (1004, 1104) of the sealing element (908) extends at an angle dependent on a curvature of the base cover (902).

6. The rear-view assembly as claimed in claim 1, wherein the sealing element (908) provides a seal between the shroud (518) and the base cover (902).

7. The rear-view assembly as claimed in claim 2 and claim 4, wherein geometry of the at least one cross section (1006) of the head portion (1002, 1102) and foot portion (1004, 1104) of the sealing element (908) is adapted to the curvature of the shroud (518) and base cover (902) respectively.

8. The rear-view assembly as claimed in claim 1, wherein the head portion (1002, 1102) comprises two cross sections (1006) for contact with a curved surface of the shroud (518), wherein the curved surface is anyone of a convex and concave surface.

9. The rear-view assembly as claimed in claim 2, wherein the at least one cross-section (1006) at the head portion (1002, 1102) is substantially in a form of a triangle for contact with the curved surface of the shroud (518), wherein the curved surface is anyone of a convex and concave surface.

10. The rear-view assembly as claimed in claim 2, wherein the at least one cross section (1006) of the head portion (1002, 1102) of the sealing element (908) is of round shape.

11. The rear-view assembly as claimed in claim 1, wherein a case frame (702) is mounted on the base (204) with the case lower (602) being attached to the case frame (702).

12. The rear-view assembly as claimed in claim 1, wherein the actuator (402) comprises a hinge (506), and wherein the hinge (506) of the actuator (518) is adapted to be engaged by a complementary hinge provided by the case frame (702).

13. A vehicle with at least one rear-view assembly of claim 1.
